# EUROPEAN PATENT SPECIFICATION

(11) **EP 4 290 027 B1**
(45) Date of publication and mention of the grant of the patent: **25.11.2026**
(21) Application number: 23206786.8
(22) Date of filing: 14.10.2019
(51) Int. Cl.: B32B 5/24, B32B 5/02, B32B 5/18, B32B 7/022, E04B 1/80, E04B 7/22

(54) **INSULATION BOARD WITH IMPROVED PERFORMANCE**
DÄMMPLATTE MIT VERBESSERTER LEISTUNG
PANNEAU D'ISOLATION À PERFORMANCES AMÉLIORÉES

(30) Priority: 23.10.2018 US 201862749530 P; 15.03.2019 US 201962819089 P
(43) Date of publication of application: 13.12.2023
(62) Document number(s) of the earlier application(s) in accordance with Art. 76 EPC: 19876027.4 / 3 870 436
(73) Proprietor: Carlisle Construction Materials, LLC, Carlisle, PA 17013 (US)
(72) Inventor: LEATHERMAN, Matthew, Carlisle, 17013 (US); ZHANG, Xuan, Carlisle, 17013 (US); TURNOW, Cody, York, 17408 (US)
(74) Representative: Mewburn Ellis LLP

(56) References cited:
- US-A1- 2011 131 910
- US-A1- 2013 264 012
- US-A1- 2016 361 894
- US-A1- 2018 087 277

## Description

### Technical Field:

The present invention relates to improved insulation board performance imparted by enhanced physical properties through the use of woven mats as facers for insulation boards used in building construction in general and in roofing construction in particular. When used in a roof assembly, the present invention permits the roofing system to meet the Very Severe Hail (VSH) testing rating with a low or typical density insulation board.

### Background of the Invention:

Currently, facers for polyurethane or polyisocyanurate (Polyiso) foam roofing insulation boards are typically made either from a Glass Reinforced Felt (GRF) facer or from a Coated Glass Facer (CGF) material. Facers serve a few purposes on the insulation board and in the roof system. For example, facers help provide structural integrity to the foam board and protect the friable foam surface from forces exerted by hail, foot traffic, heavy HVAC equipment and construction equipment. Facers also provide added strength to the foam board with regard to wind uplift performance. Both GRF and CGF contain fiberglass and thus are skin irritants during the manufacturing process and in end-use application. With GRF facers, glass fibers are added to the paper to improve dimensional stability, especially when the facer is wet. However, the glass fibers do not prevent the board from warping due to dimensional change in the GRF facer after exposure to moisture, or from losing strength while exposed to moisture, such as a leak. While coated glass facers do offer improved resistance to moisture and mold when compared to GRF facers, these facers discolor after exposure to moisture, and are rigid so they do not spread force across the board, and also have the tendency to absorb excessive amounts of chemicals during the production of the foam board. Additional disadvantages of these fiberglass containing facer materials include: (a) they do not offer sufficiently strong indentation resistance, (b) they tend to peel off and delaminate from the polyurethane or polyisocyanurate insulation boards, and (c) the glass fiber content results in handling complaints during production and installation of the boards.

Importantly, the fasteners that secure these foam roofing boards to the roof also pass through the boards' facers. Unfortunately, wind uplift across the boards can cause fastener pull-through which results in failure of the fully adhered roof system. To improve wind uplift performance of the roof system, additional fasteners are typically driven through the insulation board to keep the board anchored to the roof deck.

Therefore, what is instead desired is a polyurethane or polyisocyanurate foam roofing insulation board facer material that would both provide load spreading and added surface strength. Specifically, it would be desirable to provide a facer that assists in spreading surface loads such that the potential for fastener pull-through during wind uplift can be reduced or eliminated. The advantage of load spreading to prevent fastener pull-through also helps to firmly secure the foam insulation board to the roof. Another advantage of such added surface strength is that it would offer increased indentation resistance. This indentation resistance would be advantageous against hail hitting the roof. Most preferably, the ideal roofing system would be able to pass the recently announced "Very Severe Hail" test rating announced by Factory Mutual as described in FM 4470 (Class 1 - VSH). In addition, a facer having the desired indentation resistance would also be advantageous against workers kneeling on the roof or foot traffic on the roof during installation or roof repair. As will be explained, the present system provides this strength and load-spreading advantages. In fact, the present system has been shown to meet the Very Severe Hail (VSH) test rating. In addition, the present facer even preferably permits the roofing system to meet the Very Severe Hail (VSH) test rating even when a low or typical density insulation board is used (For example, such a density range can even be as low as found in typical density insulation boards, and could even be in the range of 8 to 96 kg/m³ (0.5 to 6.0 pcf)).

While load spreading will allow higher wind uplift values to be achieved with equivalent fasteners, load spreading will also allow an equivalent uplift to be achieved utilizing fewer fasteners. Reducing the number of fasteners in a roof system while maintaining wind uplift performance is highly advantageous because it requires less labor to install a roof system with fewer fasteners, fewer fasteners reduces the material cost of the roof system, and fewer fasteners results in fewer penetrations of the polyurethane or polyisocyanurate foam board, minimizing heat sinks, thereby leading to improved insulating performance of the insulation board.

US20160361894A1 discloses a foam sheathing reinforced with hybrid laminated fabric impregnated with vapor permeable air barrier material and method of making and using the same.

US20110131910A1 discloses a roofing cover board, roofing panel composites, and method.

US20180087277A1 discloses a high density polyurethane and polyisocyanurate construction boards and composite boards.

US20130264012A1 discloses a prefabricated roofing panel composite.

### Summary of the Invention:

The present invention provides a method of forming an insulation board assembly and installing the insulation board assembly onto a roof as set out in claim 1.

Optionally, the woven facers may be made of natural and/or synthetic yarns and/or tapes. Suitable synthetic yarns or tapes can be made from polymers such as polyethylene, ethylene and alpha-olefin copolymers, polypropylene, propylene and alpha-olefin copolymers, nylon, polyester, acrylic polyester, polyamide, aramid etc. Suitable natural yarns can be made from nature fibers, such as cotton, cellulose, wool, rayon, silk, hemp, sisal, etc.

The woven facers can have different weave density. Fabric Mesh is a measure of the density of the fabric weave as the number of yarns or tapes per 25.4 mm (inch) in both the Warp (machine) and Weft (cross) directions. Ends per inch (EPI), or ends per 25.4 mm, is the number of warp yarns or tapes per inch of woven fabric and picks per inch (PPI), or per 25.4 mm, is the number of weft yarns and tapes per 25. 4 mm (inch) of woven fabric. For example, the weave density can be 2 tapes per 25.4 mm (inch) x 2 tapes per 25.4 mm (inch) (EPIxPPI) to 100 tapes per 25.4 mm (inch) x100 tapes per 25.4 mm (inch). Preferably, the weave density would be 4x4 to 60x60 mesh. Most preferably, the weave density would be 4x4 to 30x30 mesh. Optionally, the woven mats have different weave density along warp and weft direction, for example, the weave density can optionally be 4x8 mesh in one embodiment.

The present woven mats can have different weights, typically measured by the fabric weight in ounces per square yard or grams per square meters. According to the invention , the woven mat weight is from 20 gsm to 200 gsm. Most preferably, the woven mat weight could be from 40 gsm to 100 gsm. Alternatively, the woven mats can have different thicknesses. For example, the woven mat thickness can be from 0.03 mm to 5.1 mm (1 mil to 200 mil). Preferably, the woven mat thickness could be from 0.05 mm to 2.54 mm (2 mil to 100 mil). Most preferably, the woven mat thickness could be from 0.05 mm to 1.27 mm (2 mil to 50 mil).

Optionally, the woven mat can have a coating on one or both sides of the surface. The coating can be of different polymer compositions, such as polyethylene, ethylene and alpha-olefin copolymers, polypropylene, propylene and alpha-olefin copolymers, silicones, acrylates, natural rubber, styrene-butadiene rubber, etc. Advantageously, such coating will provide bleed through resistance during the polyurethane or polyisocyanurate board manufacturing process, water resistance during foam board transportation, and slip and water resistance during field installation. The coating may additionally provide improved adhesion to the polyurethane or polyisocyanurate foam during manufacturing and provide improved compatibility and adhesion to bonding adhesives during field installation. The bonding adhesives can consist of different polymer compositions, such as polyurethane, nitrile, neoprene, chloroprene, silane-terminated polyether, styrene butadiene rubber, acrylic, ethylene propylene diene monomer (EPDM), etc.

Optionally, each of the top and bottom woven mats can have an additional layer of non-woven material laminated to one or both sides. The lamination could optionally be done with adhesives or with a tie layer. When the non-woven layer is in contact with the polyurethane or polyisocyanurate insulating foam during the manufacturing process, the non-woven layer may increase the surface roughness and surface area of the woven mat to allow the woven mat to have better adhesion or bonding with the polyurethane or polyisocyanurate foam. When the non-woven layer is positioned on the outside (i.e.: top or bottom) of the foam insulation board, it may enhance the slip resistance and improve adhesion performance with bonding adhesives during the field installation. The non-woven fiber can optionally be made of different polymer composition, such as polyester, polyethylene, ethylene and alpha-olefin copolymers, polypropylene, propylene and alpha-olefin copolymers, nylon, glass, Kevlar, basalt, carbon fiber, etc.

Optionally, the woven mats may be laminated with a glass scrim, glass mat, carbon fibers scrim, or coated PET scrim. When laminated to the woven mat, these materials could potentially improve dimensional stability of the facer and the insulation board.

Optionally, the woven mats can be made of low shrinkage polymer yarns or tapes. The shrinkage rate of polymer tape can be assessed by the percentage of length change when the polymer tape is heated from room temperature to 100 °C. Preferably, the polymer tape used in the woven mat has < 10% in shrinkage rate. Most preferable, the polymer tape has < 5% shrinkage rate.

Optionally, flame retardants can be added to polymer yarns or tapes to enhance the fire resistance of the woven facer.

In another aspect, the present invention comprises a rolled woven facer material having a sufficiently desirable strength in both its machine direction and its cross direction. This rolled woven material can then be used as a top and/or bottom facer to a polyurethane or polyisocyanurate foam insulation board. Preferably, this rolled woven facer material is quite thin and has low weight.

According to the invention, the woven facer has a tensile strength greater than 356 H176 mm (80 lbf/3 inch) in both a machine and a cross direction. A woven polypropylene facer has a tensile strength greater than 356 N/76 mm (80 lbf/3 inch) in both a machine direction and a cross direction, and preferably has a tongue tear strength of over 67N (15 lbf) in both a machine direction and a cross direction.

Advantages of the present woven facer material include the fact that it provides added surface strength, load-spreading and durability as compared to existing GRF and CGF facers. Such added surface strength and load-spreading allows for foot traffic and kneeling on the insulation boards during roof installation. It also provides superior hail resistance and equivalent mold/moisture resistance to that of CGF. Specifically, the present roofing system comprising the present facer has been shown to meet the "Very Severe Hail" test rating announced by Factory Mutual as described in FM 4470 (Class 1 - VSH).

The present woven facer is preferably a light but strong and heavy duty material. An advantage of the present woven facer material is that it has higher fastener pull through force, and thus provides excellent wind uplift resistance after the insulation board has been secured to the roof. In addition, the present woven facer system is also very durable and lengthens the effective lifespan of the foam roofing insulation board. In optional embodiments, the woven facers are made of a polymer, such as polyethylene, ethylene and alpha-olefin copolymers, polypropylene, propylene and alpha-olefin copolymers, nylon, polyester, polyamide, etc. However, it is to be understood that other woven materials including both natural and synthetic yarns or tapes, such as cotton, cellulose, rayon, silk, hemp, sisal, etc. can be used as well.

As such, the present woven facer system also offers the advantages of a higher flex modulus and a higher fastener-plate pull-through resistance as compared to traditional GRF and CGF facers.

In the case of a woven polypropylene material, the present facer can optionally be made from a plastic film that has been drawn into filaments or tapes, and then woven to create a fabric sheet or mat. In these preferred aspects, the woven mat optionally comprises a nonwoven layer on one side that will promote adhesion to the polyurethane or polyisocyanurate foam and polymer coating on the other side that will enhance water, moisture and bleed through resistance. The polymer coating can optionally provide improved compatibility and adhesion to bonding adhesives during field installation.

Another advantage of the present woven facer material is its low cost. In addition, the present woven facer materials can optionally be made from recycled plastics, providing environmental benefits.

### Brief Description of the Drawings:

Fig. 1 is a sectional side elevation view of a foam insulation board with top and bottom woven facers.
Fig. 2 is a sectional side elevation view of a foam insulation board similar to Fig. 1, but with a non-woven layer or coating above and below each of the top and bottom woven facers.
Fig. 3 is a sectional side elevation view of a foam insulation board similar to Fig. 2, but with a tie layer securing the woven and non-woven layers together.

### Detailed Description of the Present System

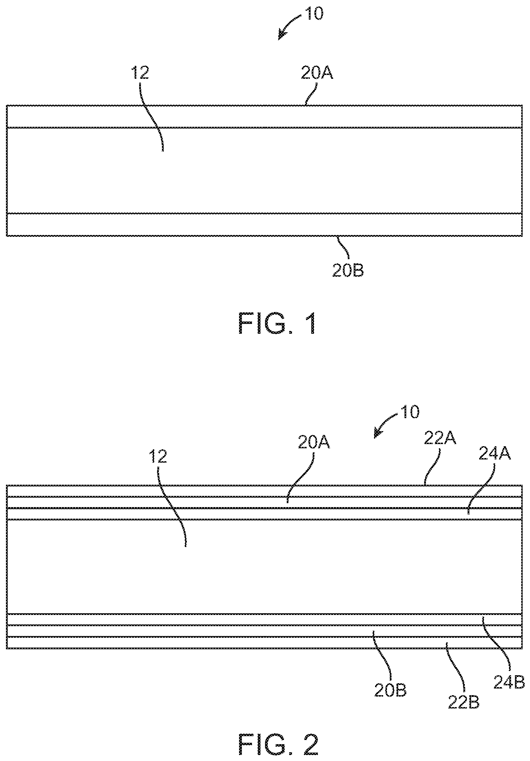

An example of an insulation board assembly as formed and used in an embodiment of the present invention is shown in Fig. 1. More particularly, the present system provides an insulation board assembly 10 that comprises: a foam insulation board 12 that may optionally be made of polyurethane or polyisocyanurate foam, or a phenolic material or an expanded polystyrene material (EPS)); a top woven facer 20A attached onto a top side of the foam insulation board, top facer 20A being made of woven material that may optionally include polypropylene; and a woven bottom facer 20B attached onto a bottom side of the foam insulation board, bottom facer 20B also optionally being made of woven polypropylene. In alternate aspects, other woven materials may be used instead, including both natural and synthetic fibers.

In another embodiment, the present system provides a thin, rolled woven facer material that has sufficient strength in both its machine and cross directions that can be attached onto the foam insulation board (for example, during an extrusion process with the foam being sandwiched between top and bottom woven facers).

Traditionally, polyurethane or polyisocyanurate is a closed-cell, rigid foam insulation board consisting of a foam core sandwiched between two facers. It is the most widely used insulating material for above-deck commercial roof construction in North America. In many existing systems, the facer materials are fiberglass, but even kraft paper has been used. These polyurethane or polyisocyanurate insulation boards are attached to the roof deck with various mechanical fasteners and construction adhesives or held in place with ballast stones or concrete pavers placed above the roofing membrane. Typically, the roofing membrane also may be mechanically attached through the foam insulation, adhered to the top polyurethane or polyisocyanurate facer or even held in place with ballast.

In accordance with the present system, the present inventors experimentally tested various facers (GRF, CGF, Non-woven polyester and woven polypropylene facer materials). The results of these experimental tests are shown in Table 1, below:

**Table 1. Common physical properties of different facer materials. SI unit values are shown without brackets and original non-SI units are shown inside brackets.**

| | GRF | CGF | Nonwoven PET | Woven PP |
|---|---|---|---|---|
| Tensile (MD) [N/76 mm] (lbf/3 in.) | 204 (46) | 307 (69) | 476 (107) | 587 (132) |
| Tensile (CD) [N/76 mm] (lbf/3 in.) | 169 (38) | 298 (67) | 298 (67) | 529 (119) |
| Breaking Elongation-MD (%) | 1.7 | 2 | 39 | 14 |
| Breaking Elongation-CD (%) | 2 | 2 | 50 | 12 |
| Tear MD [N] (lbf) | 1.8 (0.4) | 2.7 (0.6) | 30 (6.8) | 209 (47.0) |
| Tear CD [N] (lbf) | 3.1 (0.7) | 3.6 (0.8) | 46.7 (10.5) | 218 (49.0) |

In addition, the present inventors also experimentally tested the same facer materials for "Pull-Through" and "wind uplift". The results of these experimental tests are shown in Table 2 below.

The Pull-Through test procedure is designed to evaluate the strength of substrate/stress plate combinations by using tensile loading. The test method described below utilizes a nominal 356 x 356 mm (14 x 14 in.) test sample and test jig. The test method is intended to be used to evaluate various membranes, membrane/stress plate combinations, substrates or substrate/stress plate combinations for comparison to each other in order to determine the products are to be used large scale wind resistance classification testing.

The detailed testing procedure is as follows. The 14 x 14 Substrate Test Jig is secured to the moving crosshead of the Tinius Olsen machine. When ready for testing, the sample is slid into the 14 x 14 Substrate Test Jig with the stress plate located on the underside of the test sample. The screw end of the fastener is then secured in into the stationary jaw. Zero the Tinius Olsen machine to clear data before the first sample is tested. Force is exerted in a direct line perpendicular to the plane of the substrate/stress plate interface at a crosshead speed of 51 mm/min (2 in./min). While the sample is being tested, the sample shall be visually examined to ensure that it continues to meet the Conditions of Acceptance. Continue the testing until the sample fails, higher forces are unable to be attained or maintained, or at the discretion of the test sponsor. Failure is considered to occur when the Conditions of Acceptance are no longer being met or until the tensile force is no longer able to be maintained. Upon completion of the test, the sample shall be examined and any item not conforming to the Conditions of Acceptance noted. The results of the Pull-Through Test shall be stated in pounds. The result assigned to the sample shall be the maximum force which the sample reached prior to failure. Conditions of Acceptance are: 1. all samples should remain secured in their test jig until failure of the test sample; 2. The overall sample results shall be determined based on the average of three (3) tests. If the standard deviation of the three values divided by the mean is greater than 20%, an additional test(s) shall be conducted. The results of all tests shall be used to determine the final average.

**Table 2. Performance of polyisocyanurate board with different facer materials. SI unit values are shown without brackets and original non-SI units are shown inside brackets.**

| Facer Type | GRF | CGF | Nonwoven PET | Woven PP |
|---|---|---|---|---|
| Pull-through [N] (lbf) | 787 (177) | 1165 (262) | 1170 (263) | 2024 (455) |
| Wind uplift | 1-60 | 1-90 | 1-105 | 1-120 |

While the woven facer performed exceedingly well when compared to GRF and CGF with fastener pull-through/wind uplift, it also shows superior performance with regard to moisture resistance per ASTM C209-Water Absorption. This is shown below in Table 3.

**Table 3. Moisture absorption of polyisocyanurate board with different facer materials.**

| Facer Type | GRF | CGF | Nonwoven PET | Woven PP |
|---|---|---|---|---|
| Water Absorption | 0.39% | 0.30% | 0.07% | 0.06% |

As a result of this testing, it was discovered that woven polypropylene facers 20A and 20B offered substantial benefits (as described herein) over traditional GRF and CGF facers.

In particular, the present woven facers 20A and 20B provide the advantages of strength in both (perpendicular) machine direction and cross directions. In preferred aspects, the strength in the cross direction is at least 70% of the strength in the machine direction.

According to the invention, the present facer materials being supplied on rolls, have weight of 20 gsm to 200 gsm; and have a tensile strength of at least 365 N/76 mm (80 lb/3 inch). The advantage of this small thickness is that it makes the facers easier to roll.

In various optional aspects, the woven facers 20A and 20B can be made of natural and/or synthetic yarns and/or tapes. The synthetic yarns or tapes can be made from polymers such as polyethylene, ethylene and alpha-olefin copolymers, polypropylene, propylene and alpha-olefin copolymers, nylon, polyester, acrylic polyester, polyamide, aramid etc. The yarns can be made from natural fibers, such as cotton, cellulose, wool, rayon, silk, hemp, sisal, etc.

According to the invention, the present insulation board assembly meets the Very Severe Hail (VSH) rating of FM 4470 (Class 1). This can even be accomplished using low or typical density insulation board. In one embodiment, the foam insulation board has a density of 8 to 96 kg/m³ (0.5 to 6.0 pcf). This represents an advantage over existing (and costlier) approaches of using gypsum or press board to achieve the Very Severe Hail (VSH) rating.

In addition, the adhesion between the insulation board and the facer could potentially be stronger than can be achieved by existing standard density insulation boards and facers made of paper, glass fiber reinforced paper or coated glass facers (GRF/CGF), foils, films or laminates.

In optional preferred embodiments, the present insulation board with woven facer may also be used under a sheet of roof membrane, such as EPDM (Ethylene Propylene Diene Monomer), TPO (thermoplastic olefin), PVC (polyvinyl chloride), KEE (ketone ethylene ester) or Hypalon, of various thickness to provide a roofing structure capable of achieving the Very Severe Hail (VSH) rating. Optionally, EPDM, TPO, PVC, KEE and Hypalon roof membrane can have non-woven materials laminated on the back side. The non-woven fleece could potentially improve the adhesion performance of roof membrane to the insulation board.

In other optional preferred aspects, bonding adhesives are used to adhere the roof membrane onto the insulation board. Optionally, such bonding adhesive can include extruded coatings, spray coatings or roller applied coatings. Examples of such adhesive promoters include Flexible FAST^{™}, TPO bonding adhesive, Cav-Grip III^{™} and EPDM bonding adhesive.

### Roof System Performance:

Factory Mutual's 4470's procedure for Very Severe Hail (VSH) Testing is a new test standard that has had a significant impact on the construction of commercial roof systems in fourteen states throughout the Midwest. The test involved propelling a 51-mm-diameter (2-inch-diamter) ice ball at a roof system test specimen at a velocity of 46.3-48.8 metres per second (152 to 160 feet per second). The membrane must not be punctured and it must remain adhered to the substrate board. The substrate boards cannot be cracked or have the facers delaminated from the foam to pass this test.

Two widely used cover boards (i.e.: High Density (HD) Polyiso and Gypsum board), that are used in the commercial roofing industry have been unable to withstand this VSH test (See Table 4 and 5 below). The only roofing systems that have been able to achieve limited success on the VSH rating so far have incorporated OSB cover boards and Plywood cover boards (See Table 6 below). However, the OSB and Plywood boards have significant limitation since they are expensive, heavier than 12.7 mm (0.5") HD Polyiso, and are not able to achieve the same fire ratings that systems containing Gypsum or HD Polyiso cover boards.

**Table 4. VSH test results for 12.7 mm (½) " SecurShield HD Polyiso board.**

| Insulation | Membrane | Adhesive | Testing Location | VSH Results | Reason for failure |
|---|---|---|---|---|---|
| | 145 EPDM Fleece | Flex FAST | FM | Fail | |
| | 115 EPDM Fleece | Flex FAST | FM | Fail | |
| | 2.3 mm (90 mil) EPDM | EPDM Bonding | FM | Fail | |
| | 1.9 mm (75 mil) Sure-Tough | EPDM Bonding | FM | Fail | |
| 12.7 mm (1/2") SecurShield High Density Polyiso Board | 145 White EPDM Fleece | Flex FAST | FM | Fail | |
| | 115 White EPDM Fleece | Flex FAST | FM | Fail | Cracks in HD Board |
| | 2.3 mm (90 mil) White EPDM | EPDM Bonding | FM | Fail | |
| | 135 PVC Fleece | Flex FAST | FM | Fail | |
| | 115 PVC Fleece | Flex FAST | FM | Fail | |
| | 2.0 mm (80 mil) PVC | PVC Bonding | FM | Fail | |
| | 135 TPO Fleece | Flex FAST | FM | Fail | |
| | 115 TPO Fleece | Flex FAST | FM | Fail | |
| | 2.0 mm (80 mil) TPO | TPO Bonding | FM | Fail | |

**Table 5. VSH test results for 12.7 mm (½") DensDeck Prime board (Gypsum).**

| Insulation | Membrane | Adhesive | Testing Location | VSH Results | Reason for failure |
|---|---|---|---|---|---|
| | 145 EPDM Fleece | Flex FAST | FM | Fail | |
| | 115 EPDM Fleece | Flex FAST | FM | Fail | |
| | 2.3 mm (90 mil) EPDM | EPDM Bonding | FM | Fail | Loss of Adhesion (gypsum turned to powder at area of impact) |
| 12.7 mm (1/2") DensDeck Prime Board | 1.9 mm (75 mil) Sure-Tough | EPDM Bonding | FM | Fail | |
| | 145 White EPDM Fleece | Flex FAST | FM | Fail | |
| | 115 White EPDM Fleece | Flex FAST | FM | Fail | |
| | 2.3 mm (90 mil) White EPDM | EPDM Bonding | FM | Fail | |
| | 135 PVC Fleece | Flex FAST | FM | Fail | |
| | 115 PVC Fleece | Flex FAST | FM | Fail | |
| | 2.0 mm (80 mil) PVC | PVC Bonding | FM | Fail | |
| | 135 TPO Fleece | Flex FAST | FM | Fail | |
| | 115 TPO Fleece | Flex FAST | FM | Fail | |
| | 2.0 mm (80 mil) TPO | TPO Bonding | FM | Fail | |

**Table 6. VSH test results for StormBase (OSB) board.**

| Insulation | Membrane | Adhesive | Testing Location | VSH Results | Reason for failure |
|---|---|---|---|---|---|
| | 145 EPDM Fleece | Flex FAST | FM | Fail | cracks in OSB |
| | 115 EPDM Fleece | Flex FAST | FM | Fail | |
| | 2.3 mm (90 mil) EPDM | EPDM Bonding | FM | Fail | |
| | 2.3 mm (90 mil) White EPDM | EPDM Bonding | FM | Fail | |
| | 1.9 mm (75 mil) Sure-Tough | EPDM Bonding | FM | Fail | |
| StormBase (OSB) | 115 White EPDM Fleece | Flex FAST | FM | Fail | |
| | 145 White EPDM Fleece | Flex FAST | FM | Pass | |
| | 135 PVC Fleece | Flex FAST | FM | Fail | heat aging fail |
| | 115 PVC Fleece | Flex FAST | FM | Fail | |
| | 2.0 mm (80 mil) PVC | PVC Bonding | FM | Fail | |
| | 135 TPO Fleece | Flex FAST | FM | Pass | |
| | 115 TPO Fleece | Flex FAST | FM | Pass | |
| | 2.0 mm (80 mil) TPO | TPO Bonding | FM | Pass | |

In contrast to the above existing systems, various embodiments of the present invention (i.e.: systems containing high density and normal density Polyiso insulation boards made with woven polypropylene facer materials) showed significant improvement and were able to withstand the VSH Test. The present roof systems successfully passed both internal and Factory Mutual tests due to the unique physical properties provided by the present woven facers. The results are summarized in the Table 7 and 8 below.

As can be appreciated, the present roof systems using standard density or high density insulation board and woven PP facers can be paired with TPO FleeceBACK, EPDM FleeceBACK, PVC FleeceBACK, KEE FleeceBACK and bareback TPO, EPDM, PVC and KEE HP. These membranes may optionally be bonded with two-part polyurethane adhesive, TPO Bonding adhesives, PVC adhesives, EPDM Bonding Adhesives, water based adhesives, LVOC bonding adhesives and Cav-Grip III. This type of roof system has significant performance advantageous over that with OSB and plywood board as the insulation board with woven PP facer delivers higher R-value per 25.4 mm (inch) and is less costly.

**Table 7. VSH test results for 12.7 mm (½") HD Polyiso board with woven PPfacer.**

| Insulation | Source | Membrane | Adhesive | Testing Location | VSH Results |
|---|---|---|---|---|---|
| | | 1.1 mm (45 mil) TPO | Cav-Grip III | in-house | pass |
| 1/2" HD Polyiso w/ Woven PP Facer | | 1.5 mm (60 mil) TPO | Cav-Grip III | in-house | pass |
| | This invention | 2.3 mm (90 mil) White EPDM | 90-8-30A | in-house | pass |
| | | 105 EPDM Fleece | Flex FAST | in-house | pass |
| | | 1.5 mm (60 mil) TPO | Cav-Grip III | FM | pass |
| | | 2.0 mm (80 mil) TPO | Cav-Grip III | FM | pass |

**Table 8. VSH test results for normal density Polyiso board with woven PP facer.**

| Insulation | Source | Membrane | Adhesive | Testing Location | VSH Results |
|---|---|---|---|---|---|
| Standard Density Polyiso w/Woven PP Facer | | 80 mil TPO | Cav-Grip III | in-house | pass |
| | This invention | 90 mil White EPDM | 90-8-30A | in-house | pass |
| | | 105 EPDM Fleece | Flex FAST | in-house | pass |
| | | 60 mil TPO | Cav-Grip III | FM | pass |
| | | 80 mil TPO | Cav-Grip III | FM | pass |

In preferred aspects illustrated in Fig. 2, the woven facers preferably include chemical coatings to make them waterproof. Specifically, system 10 comprises a foam insulation board 12, having a top woven facer 20A and a bottom woven facer 20B, as described above. Preferably, top woven facer 20A and bottom woven facer 20B comprise no glass fibers. Foam insulation board preferably has a density of 8 to 96 kg/m³ (0.5 to 6.0 pcf) and the fastener Pull-Through value is higher than 1334 N (300 lbf). Preferably, the roof assembly 10 consists of roof membrane, bonding adhesive and the insulation board, and wherein the roof assembly meets the Very Severe Hail rating of FM 4470 (Class 1).

Preferably, each of woven facers 20A and 20B comprise yarns or tapes made from synthetic polymers such as woven polypropylene and/or propylene alpha-olefin copolymers or ethylene alpha-olefin copolymers having a warp density from 4 to 30 ends per 25.4 mm (EPI) or a weft density from 4 to 30 picks per 25.4 mm (PPI), a weight from 40 to 200 grams per square meter, and a thickness of 0.05 mm to 1.3 mm (2 mil to 50 mil). Each of the top and bottom facers 20A and 20B have a tensile strength greater than 356 N/76 mm (80 lbf/3 inch) in both a machine direction and a cross direction and a tear strength of over 67 N (15 lbf) in both a machine direction and a cross direction.

As seen in Fig. 2, each of facers 20A and 20B may optionally have a polymer coating on one or both side of one or both of the top and bottom facers (i.e.: 22A, 24A, 22B and 24B). In preferred aspects, some or all of polymer coating layers 22A, 24A, 22B and 24B are selected from the group consisting of: polyethylene, ethylene and alpha-olefin copolymers, polypropylene, propylene and alpha-olefin copolymers, silicones, acrylates, polyurethane, natural rubber, and styrene butadiene rubber.

Alternatively, each of facers 20A and 20B may optionally have a non-woven material laminated on one or both side of one or both of the top and bottom facers (i.e.: layers 22A, 24A, 22B and 24B). The non-woven material layers may be selected from the group consisting of polyester, polyethylene, ethylene and alpha-olefin copolymers, polypropylene, propylene and alpha-olefin copolymers, nylon, glass, Kevlar, basalt, and carbon fiber. As such, layers 22A, 24A, 22B and 24B can comprise various polymer coatings or other non-woven material. Optionally, layers 24A and 24B can comprise a laminated glass mat, a glass scrim or a coated glass scrim.

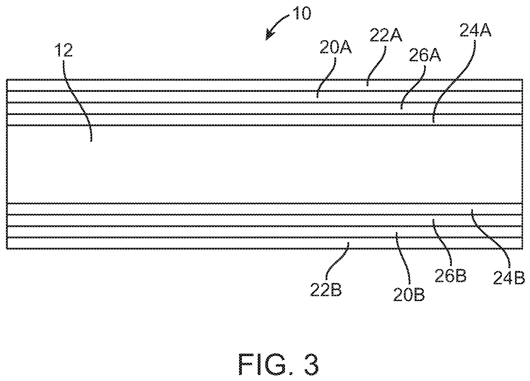

Finally, as seen in Fig. 3, the non-woven layers 24A and 24B can be laminated to the woven layers 20A and 20B via an adhesive or a tie layer 26A, 26B.

## Claims

1. A method of forming an insulation board assembly and installing the insulation board assembly onto a roof, comprising:
(a) providing a first roll of facer material, the facer material of the first roll being woven and having a tensile strength greater than 356 N/76 mm (80 lbf/3 inch) in both a machine direction and a cross direction and a weight of 20 to 200 grams per square meter;
(b) providing a second roll of facer material, the facer material of the second roll being woven and having a tensile strength greater than 356 N/76 mm (80 lbf/3 inch) in both a machine direction and a cross direction and a weight of 20 to 200 grams per square meter;
(c) sandwiching a foam between the facer material of the first roll and the facer material of the second roll to form an insulation board assembly that when adhered or mechanically fastened onto a roof assembly permits the roof assembly to meet the Very Severe Hail rating of FM 4470 (Class 1); and
(d) adhering or mechanically fastening the insulation board assembly onto the roof assembly such that the roof assembly meets the Very Severe Hail rating of FM 4470 (Class 1).

2. The method of claim 1, wherein the facer material of the first roll and the facer material of the second roll comprise yarns or tapes.

3. The method of claim 2, wherein the facer material of the first roll and the facer material of the second roll comprise yarns or tapes made from synthetic polymers.

4. The method of claim 2 or claim 3, wherein the facer material of the first roll and the facer material of the second roll each have a warp density from 4 to 30 ends per 25.4 mm (per inch) and a weft density from 4 to 30 picks per 25.4 mm (per inch).

5. The method of any one of claims 1 to 4, wherein the facer material of the first roll and the facer material of the second roll each have a tongue tear strength of over 67 N (15 lbf) in both a machine direction and a cross direction.

6. The method of any one of claims 1 to 5, wherein the facer material of the first roll and the facer material of the second roll each comprise woven polypropylene, propylene alpha-olefin copolymers or ethylene alpha-olefin copolymers.

7. The method of any one of claims 1 to 6, wherein the facer material of the first roll and the facer material of the second roll comprise no glass fibers.

8. The method of any one of claims 1 to 7, wherein the facer material of the first roll and the facer material of the second roll each have a thickness of 0.05 mm (2 mil) to 1.27 mm (50 mil).

9. The method of any one of claims 1 to 8, wherein the foam insulation board is a polyisocyanurate or polyurethane foam.

10. The method of any one of claims 1 to 9, wherein the foam insulation board has a density of 8 to 96 kg/m³ (0.5 to 6.0 pcf).

11. The method of any one of claims 1 to 10, wherein the roof assembly consists of a roof membrane, a bonding adhesive and the foam insulation board.

12. The method of claim 1, further comprising:
applying a polymer coating on one or both sides of one or both of the facer material of the first roll and the facer material of the second roll.

13. The method of claim 1, further comprising:
laminating a non-woven material on one or both sides of one or both of the facer material of the first roll and the facer material of the second roll.

14. The method of claim 13, wherein the non-woven material is laminated to the facer material of the first roll and/or the facer material of the second roll via adhesive or a tie layer.

15. The method of claim 13 or claim 14, wherein the non-woven material is selected from the group consisting of polyester, polyethylene, ethylene alpha-olefin copolymers, polypropylene, propylene alpha-olefin copolymers, nylon, glass, Kevlar, basalt, and carbon fiber.

16. The method of claim 1, further comprising:
laminating one or both sides of one or both of the facer material of the first roll and the facer material of the second roll with a glass mat, a glass scrim or a coated glass scrim.

## Patentansprüche

1. Verfahren zum Ausbilden einer Dämmplatten-Baueinheit und zum Installieren der Dämmplatten-Baueinheit auf einem Dach, das Folgendes umfasst:
(a) das Bereitstellen einer ersten Rolle von Kaschiermaterial, wobei das Kaschiermaterial der ersten Rolle gewebt ist und sowohl in Maschinenrichtung als auch in Querrichtung eine Zugfestigkeit von mehr als 356 N/76 mm (80 lbf/3 in) und ein Gewicht von 20 bis 200 g/m² aufweist;
(b) das Bereitstellen einer zweiten Rolle von Kaschiermaterial, wobei das Kaschiermaterial der zweiten Rolle gewebt ist und sowohl in Maschinenrichtung als auch in Querrichtung eine Zugfestigkeit von mehr als 356 N/76 mm (80 lbf/3 in) und ein Gewicht von 20 bis 200 g/m² aufweist;
(c) das Einbringen eines Hartschaums zwischen das Kaschiermaterial der ersten Rolle und das Kaschiermaterial der zweiten Rolle, um eine Dämmplatten-Baueinheit auszubilden, die, wenn sie auf eine Dachkonstruktion aufgeklebt oder mechanisch darauf befestigt wird, ermöglicht, dass die Dachkonstruktion die Hagelwiderstandsklasse für extremen Hagel gemäß FM 4470 (Klasse 1) erreicht; und
(d) das Aufkleben oder mechanische Befestigen der Dämmplatten-Baueinheit auf der Dachkonstruktion, so dass die Dachkonstruktion die Hagelwiderstandsklasse für extremen Hagel gemäß FM 4470 (Klasse 1)erreicht.

2. Verfahren nach Anspruch 1, wobei das Kaschiermaterial der ersten Rolle und das Kaschiermaterial der zweiten Rolle Garne oder Bänder umfassen.

3. Verfahren nach Anspruch 2, wobei das Kaschiermaterial der ersten Rolle und das Kaschiermaterial der zweiten Rolle Garne oder Bänder aus synthetischen Polymeren umfassen.

4. Verfahren nach Anspruch 2 oder 3, wobei das Kaschiermaterial der ersten Rolle und das Kaschiermaterial der zweiten Rolle jeweils eine Kettdichte von 4 bis 30 Enden pro 25,4 mm (pro Zoll) und eine Schussdichte von 4 bis 30 Schüssen pro 25,4 mm (pro Zoll) aufweisen.

5. Verfahren nach einem der Ansprüche 1 bis 4, wobei das Kaschiermaterial der ersten Rolle und das Kaschiermaterial der zweiten Rolle sowohl in Maschinenrichtung als auch in Querrichtung jeweils eine Zungen-Reißfestigkeit von mehr als 67 N (15 lbf) aufweisen.

6. Verfahren nach einem der Ansprüche 1 bis 5, wobei das Kaschiermaterial der ersten Rolle und das Kaschiermaterial der zweiten Rolle jeweils gewebtes Polypropylen, gewebte Propylen-α-Olefin-Copolymere oder gewebte Ethylen-α-Olefin-Copolymere umfassen.

7. Verfahren nach einem der Ansprüche 1 bis 6, wobei das Kaschiermaterial der ersten Rolle und das Kaschiermaterial der zweiten Rolle keine Glasfasern umfassen.

8. Verfahren nach einem der Ansprüche 1 bis 7, wobei das Kaschiermaterial der ersten Rolle und das Kaschiermaterial der zweiten Rolle jeweils eine Dicke von 0,05 mm (2 mil) bis 1,27 mm (50 mil) aufweisen.

9. Verfahren nach einem der Ansprüche 1 bis 8, wobei die Hartschaum-Dämmplatte ein Polyisocyanurat- oder Polyurethan-Hartschaum ist.

10. Verfahren nach einem der Ansprüche 1 bis 9, wobei die Hartschaum-Dämmplatte eine Dichte von 8 bis 96 kg/m³ (0,5 bis 6,0 pcf) aufweist.

11. Verfahren nach einem der Ansprüche 1 bis 10, wobei die Dachkonstruktion aus einer Dachmembran, einem Haftkleber und der Hartschaum-Dämmplatte besteht.

12. Verfahren nach Anspruch 1, das weiters Folgendes umfasst:
das Aufbringen einer Polymer-Beschichtung auf einer oder beiden Seiten eines oder beider aus dem Kaschiermaterial der ersten Rolle und dem Kaschiermaterial der zweiten Rolle.

13. Verfahren nach Anspruch 1, das weiters Folgendes umfasst:
das Auflaminieren eines Vliesmaterials auf eine oder beide Seiten eines oder beider aus dem Kaschiermaterial der ersten Rolle und dem Kaschiermaterial der zweiten Rolle.

14. Verfahren nach Anspruch 13, wobei das Vliesmaterial mittels eines Klebers oder eines Haftvermittlers auf das Kaschiermaterial der ersten Rolle und/oder das Kaschiermaterial der zweiten Rolle auflaminiert wird.

15. Verfahren nach Anspruch 13 oder 14, wobei das Vliesmaterial aus der aus Polyester, Polyethylen, Ethylen-α-Olefin-Copolymeren, Polypropylen, Propylen-α-Olefin-Copolymeren, Nylon, Glas, Kevlar, Basalt und Carbonfasern bestehenden Gruppe ausgewählt ist.

16. Verfahren nach Anspruch 1, das weiters Folgendes umfasst:
das Laminieren einer oder beider Seiten eines oder beider aus dem Kaschiermaterial der ersten Rolle und dem Kaschiermaterial der zweiten Rolle mit einer Glasmatte, einem Glasgarngelege oder einem beschichteten Glasgarngelege.

## Revendications

1. Procédé de formation d'un ensemble de panneau d'isolation et d'installation de l'ensemble de panneau d'isolation sur une toiture, comprenant les étapes consistant à :
(a) fournir un premier rouleau de matériau de parement, le matériau de parement du premier rouleau étant tissé et présentant une résistance à la traction supérieure à 356 N/76 mm (80 lbf/3 pouces) à la fois dans la direction de la machine et dans une direction transversale, et un grammage de 20 à 200 grammes par mètre carré ;
(b) fournir un second rouleau de matériau de parement, le matériau de parement du second rouleau étant tissé et présentant une résistance à la traction supérieure à 356 N/76 mm (80 lbf/3 pouces) à la fois dans la direction de la machine et dans une direction transversale, et un grammage de 20 à 200 grammes par mètre carré ;
(c) enserrer une mousse entre le matériau de parement du premier rouleau et le matériau de parement du second rouleau pour former un ensemble de panneau d'isolation qui, lorsqu'il est collé ou fixé mécaniquement sur un ensemble de toiture, permet à l'ensemble de toiture de satisfaire à la classification Very Severe Hail de la norme FM 4470 (classe 1) ; et
(d) coller ou fixer mécaniquement l'ensemble de panneau d'isolation sur l'ensemble de toiture de telle sorte que l'ensemble de toit satisfasse à la classification Very Severe Hail de la norme FM 4470 (classe 1).

2. Procédé selon la revendication 1, dans lequel le matériau de parement du premier rouleau et le matériau de parement du second rouleau comprennent des fils ou des rubans.

3. Procédé selon la revendication 2, dans lequel le matériau de parement du premier rouleau et le matériau de parement du second rouleau comprennent des fils ou des rubans fabriqués à partir de polymères synthétiques.

4. Procédé selon la revendication 2 ou la revendication 3, dans lequel le matériau de parement du premier rouleau et le matériau de parement du second rouleau présentent chacun une densité de chaîne de 4 à 30 extrémités par 25,4 mm (par pouce) et une densité de trame de 4 à 30 duites par 25,4 mm (par pouce).

5. Procédé selon l'une quelconque des revendications 1 à 4, dans lequel le matériau de parement du premier rouleau et le matériau de parement du second rouleau présentent chacun une résistance à la déchirure de languette de plus de 67 N (15 lbf) à la fois dans une direction de machine et dans une direction transversale.

6. Procédé selon l'une quelconque des revendications 1 à 5, dans lequel le matériau de parement du premier rouleau et le matériau de parement du second rouleau comprennent chacun du polypropylène tissé, des copolymères de propylène et d'alpha-oléfine ou des copolymères d'éthylène et d'alphaoléfine.

7. Procédé selon l'une quelconque des revendications 1 à 6, dans lequel le matériau de parement du premier rouleau et le matériau de parement du second rouleau ne comprennent pas de fibres de verre.

8. Procédé selon l'une quelconque des revendications 1 à 7, dans lequel le matériau de parement du premier rouleau et le matériau de parement du second rouleau présentent chacun une épaisseur de 0,05 mm (2 mil) à 1,27 mm (50 mil).

9. Procédé selon l'une quelconque des revendications 1 à 8, dans lequel le panneau d'isolation en mousse est une mousse de polyisocyanurate ou de polyuréthane.

10. Procédé selon l'une quelconque des revendications 1 à 9, dans lequel le panneau d'isolation en mousse présente une densité de 8 à 96 kg/m³ (de 0,5 à 6,0 pcf).

11. Procédé selon l'une quelconque des revendications 1 à 10, dans lequel l'ensemble de toiture est constitué d'une membrane de toiture, d'un adhésif de liaison et du panneau d'isolation en mousse.

12. Procédé selon la revendication 1, comprenant en outre l'étape consistant à :
appliquer un revêtement polymère sur un ou les deux côtés d'un ou des deux matériaux de parement du premier rouleau et du matériau de parement du second rouleau.

13. Procédé selon la revendication 1, comprenant en outre l'étape consistant à :
stratifier un matériau non tissé sur un ou les deux côtés du matériau de parement du premier rouleau et du matériau de parement du second rouleau.

14. Procédé selon la revendication 13, dans lequel le matériau non tissé est stratifié sur le matériau de parement du premier rouleau et/ou le matériau de parement du second rouleau via un adhésif ou une couche de liaison.

15. Procédé selon la revendication 13 ou la revendication 14, dans lequel le matériau non tissé est choisi dans le groupe constitué de polyester, de polyéthylène, de copolymères d'éthylène et d'alpha-oléfine, de polypropylène, de copolymères de propylène et d'alpha-oléfine, de nylon, de verre, de Kevlar, de basalte et de fibre de carbone.

16. Procédé selon la revendication 1, comprenant en outre l'étape consistant à :
stratifier un ou les deux côtés du matériau de parement du premier rouleau et du matériau de parement du second rouleau avec un mat de verre, un canevas de verre ou un canevas de verre revêtu.
